Europäisches Patentamt

European Patent Office

Office européen des brevets

(11) Numéro de publication: **0 248 718**
**A1**

# (12) DEMANDE DE BREVET EUROPEEN

(21) Numéro de dépôt: 87401206.5

(22) Date de dépôt: 27.05.87

(51) Int. Cl.⁴: **C 10 L 11/04**

(30) Priorité: 02.06.86 FR 8608081
02.10.86 FR 8613858

(43) Date de publication de la demande:
09.12.87 **Bulletin 87/50**

(84) Etats contractants désignés:
**AT BE CH DE ES FR GB GR IT LI LU NL SE**

(71) Demandeur: **BOIVALOR S.á.r.l.**
**Z.I. de Kerprat**
**F-22970 Ploumagoar (FR)**

(72) Inventeur: **Vaudelet, Jean Claude**
**L'Egramer**
**F-22240 Frehel (FR)**

**Jacob, Jacques**
**Route de Corlay**
**F-22970 Ploumagoar (FR)**

**Le Gall, Jean**
**Pouldu**
**F-22540 Louargat (FR)**

(74) Mandataire: **Rodhain, Claude et al**
**30, rue La Boétie**
**F-75008 Paris (FR)**

(54) **Procédé de fabrication d'un dispositif d'allumage de foyers.**

(57) Procédé de fabrication d'un dispositif d'allumage de foyers consistant à plonger des morceaux de produit combustible dans un bain de paraffine fondue, retirer ces morceaux du bain de paraffine et les égoutter, refroidir les morceaux de produit combustible enrobés de paraffine, sécher les morceaux, emballer lesdits morceaux de produit combustible enrobés de paraffine dans une enveloppe également combustible.

L'invention s'utilise plus particulièrement dans les cheminées et les barbecues.

FIG 5

EP 0 248 718 A1

**Description**

"Pocédé de fabrication d'un dispositif d'allumage de foyers".

La présente invention concerne un dispositif d'allumage de foyers, ainsi que son procédé de fabrication.

La présente invention trouve une application aussi bien pour l'allumage de cheminées, que pour l'allumage de barbecues, grilles, et appareils similaires servant à la cuisson de grillades. On connaît déjà de nombreux dispositifs d'allumage de foyers. Le plus souvent, ces dispositifs d'allumage sont formés de charbon de bois. Or, ce charbon de bois est généralement conditionné, puis vendu dans des sacs en papier relativement volumineux, contenant par exemple 2 kg de charbon de bois. Après ouverture du sac l'utilisateur prélève dans celui-ci, la dose de charbon nécessaire pour chaque utilisation. Ce prélèvement se fait généralement soit à la main, ce qui est donc peu commode et excessivement salissant, soit par déversement du sac dans le foyer, ce qui est également peu commode et conduit à un dosage imprécis et souvent excessif du charbon de bois.

On a également proposé des produits d'allumage de foyers à base d'hydrocarbures. Ces produits sont cependant coûteux et polluants, et difficilement utilisables pour la cuisson d'aliments, à cause de leur toxicité.

On a aussi proposé, comme décrit dans le certificat d'utilité français publié sous le n° 2 246 624, un élément combustible composite en forme de bloc, pour la préparation de grillades. Ce bloc comprend une enveloppe semi-rigide combustible à fond perforé, qui contient trois couches combustibles superposées d'un allume-feu tel que de la paille, du petit bois et du charbon de bois. Ce type de produit présente l'inconvénient d'être cher en raison de sa structure stratifiée et des difficultés que posent sa fabrication en série. De plus, en raison de la rigidité de l'enveloppe, le bloc ne peut s'adapter correctement qu'à certains types de foyers, de formes bien définies ; enfin, les brins de paille, les fragments de bois ou de charbon de bois, et surtout la poussière de charbon de bois, appelée poussier, ressortent inévitablement de l'enveloppe, lorsque le bloc est manipulé, rendant cette opération extrêmement salissante.

On connaît également comme décrit dans le brevet US-A-3 647 403 un procédé destiné à améliorer les propriétés de combustion du charbon de bois, en imprégnant celui-ci de paraffine. Cette technique n'a jamais donné de résultats très satisfaisants.

L'invention a pour but de réaliser un procédé de fabrication permettant d'obtenir un dispositif d'allumage de foyers de faible coût de revient, facile à utiliser, et propre.

Cet objectif est atteint à l'aide d'un procédé de fabrication d'un dispositif d'allumage de foyers, notamment de foyers de cheminées et de barbecues, caractérisé par le fait qu'il comprend les étapes consistant à :

i) plonger des morceaux de produit combustible dans un bain de paraffine fondue,

ii) retirer ces morceaux de produit combustible du bain de paraffine et les égoutter,

iii) refroidir les morceaux de produit combustible enrobés de paraffine,

iv) sécher ces morceaux,

v) emballer lesdits morceaux de produit combustible enrobés de paraffine dans une enveloppe combustible, cette enveloppe étant fermée ensuite par thermosoudure.

Un autre objectif de l'invention est de réaliser un procédé permettant d'obtenir un dispositif d'allumage de foyers, plus spécialement destiné aux cheminées.

Cet objectif est atteint à l'aide du procédé de fabrication précédemment cité, mais caractérisé en ce que le produit combustible comprend environ 50% en volume de bois résineurx et environ 50% en volume de bois blanc, tel que du peuplier ; et en ce que l'on plonge ce combustible dans un bain de paraffine fondue à une température d'au moins 120° C.

Un troisième objectif de la présente invention est d'obtenir par ce procédé de fabrication, un dispositif d'allumage de foyers, plus spécialement destiné aux barbecues.

Cet objectif est atteint à l'aide du premier procédé de fabrication précédemment cité mais dans lequel le produit combustible est du charbon de bois, et dans lequel on plonge ce combustible dans un bain de paraffine de type alimentaire à une température variant entre environ 100° C et environ 180° C, pendant une à deux secondes.

D'autres caractéristiques et avantages de l'invention apparaîtront à la lecture de la description suivante d'un mode de réalisation préférentiel de l'invention donné à titre illustratif, et des dessins annexés dans lesquels :

- les Fig.1 à 6 illustrent schématiquement les diverses étapes du procédé de fabrication d'un dispositif d'allumage de foyers conforme à la présente invention,

- la Fig. 7 représente une vue schématique en perspective d'un ensemble de dispositifs d'allumage conforme à la présente invention.

Dans un premier temps, on décrira le procédé de fabrication permettant d'obtenir un dispositif d'allumage utilisable principalement dans les cheminées, et d'une manière générale dans tout type de foyer n'ayant pas vocation à être utilisé dans un but alimentaire. Dans ce cas particulier les produits combustibles sont constitués de morceaux de bois.

On décrira ensuite le procédé de fabrication permettant d'obtenir un dispositif d'allumage utilisé dans les barbecues. Dans ce second cas, le produit combustible est constitué de charbon de bois et le dispositif d'allumage doit répondre à certaines normes, puisqu'il est utilisé pour un usage alimentaire.

Le premier procédé de fabrication consiste pour l'éssentiel à :

a) tailler des morceaux de bois en forme de plaquettes,

b) plonger ces plaquettes dans un bain de paraffine à une température d'au moins 120°C, puis les retirer du bain et les laisser refroidir,

c) emballer ces plaquettes revêtues de paraffine dans une enveloppe, celle-ci étant ensuite fermée par thermosoudure.

De préférence les plaquettes sont formées de morceaux de bois, mais elles pourraient aussi bien être préalablement carbonisées sous forme de charbon de bois.

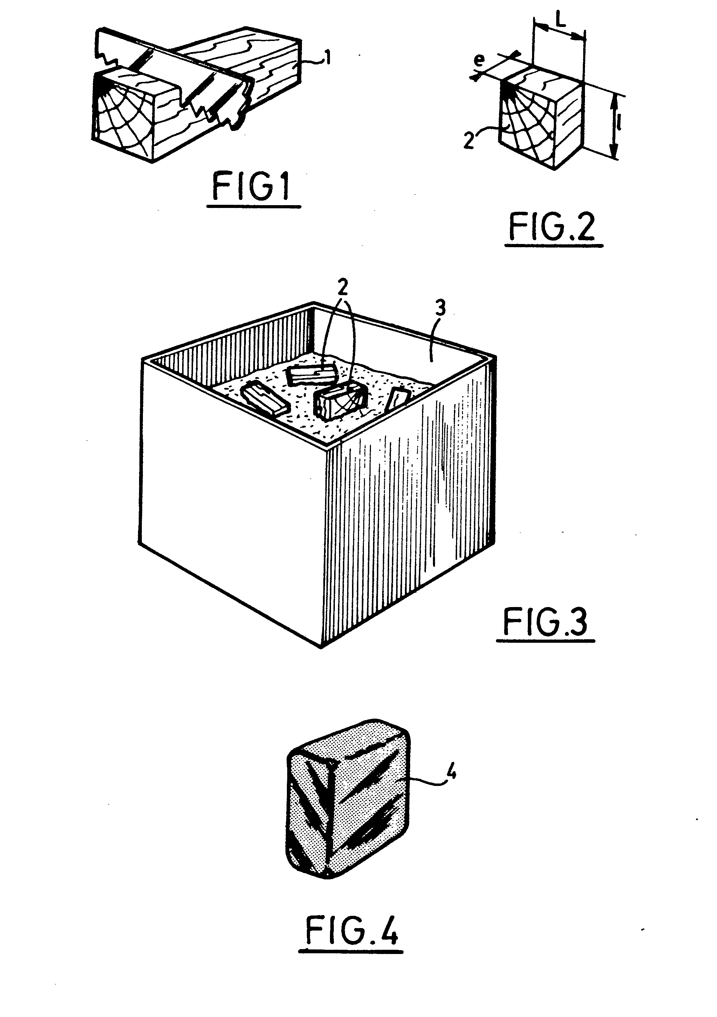

Comme illustré aux Fig.1 et 2, le procédé de fabrication consiste initialement à tailler dans le bloc de bois 1, des morceaux de bois 2, en forme de plaquettes. Les blocs de bois 1 servant de point de départ au procédé de fabrication ne sont pas nécessairement formés de blocs de géométrie régulière. Au contraire, ces blocs de bois 1 sont formés de préférence de troncs ou des branches provenant de taillis. Les morceaux de bois 2 en forme de plaquettes sont avantageusement réalisés à l'aide de systèmes hacheurs mécaniques.

De préférence, selon la présente invention, les plaquettes de bois 2 possèdent une épaisseur moyenne e comprise entre environ 2 mm et 8 mm, une largeur 1 et une longueur L moyennes comprises entre environ 1 et 4 cm.

Les plaquettes ainsi obtenues sont séchées. La demanderesse a constaté que les plaquettes répondant aux dimensions définies ci-dessus, sèchent très rapidement.

Le séchage est une étape importante, car les plaquettes débarrassées de leur humidité, seront ensuite plus facilement imprégnées de paraffine.

Après ce séchage, les plaquettes de bois 2 sont plongées, comme illustré sur la Fig.3, dans une bain 3 de paraffine fondue à une température d'au moins 120°C, pendant quelques secondes, puis sont retirées du bain 3 de paraffine.

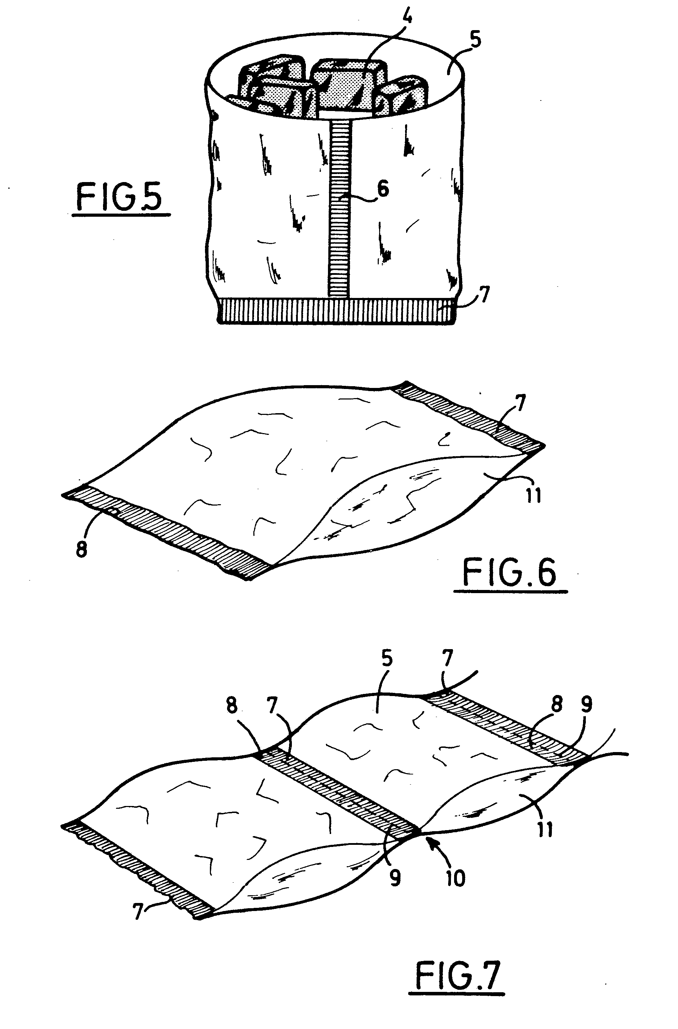

La demanderesse a déterminé que la température minimum de 120°C du bain de paraffine 3, permettait un meilleur enrobage et une meilleure imprégnation des plaquettes de bois 2, donc une meilleure protection contre les risques d'humidification ultérieurs. Les plaquettes enrobées de paraffine portent la référence 4 sur les figures 4 et 5. Après avoir été retirées du bain, les plaquettes 4 sont égouttées pendant 30 secondes environ puis refroidies et séchées à l'air frais, également pendant environ 30 secondes.

Les plaquettes de bois 4, un fois séchées sont ensuite emballées dans une enveloppe 5 (voir fig.5). Cette enveloppe 5 est alors fermée par thermosoudure, ce qui permet d'éviter que le poussier sorte de l'enveloppe 5.

De façon préférentielle, le produit combustible comprend environ 50% en volume de bois résineux et environ 50% en volume de bois blanc, tel que du peuplier.

L'enveloppe 5 est combustible, et de préférence, elle est constituée de cellulose et recouverte sur sa face interne d'un film de polyéthylène. Cette enveloppe 5 présente un poids de l'ordre de 60 g/m² pour la cellulose et 15 g/m² pour le polyéthylène.

Le cas échéant, les morceaux de produit combustible 2 peuvent être imprégnés d'un combustible volatile, par exemple de l'alcool à brûler, avant immersion dans le bain de paraffine. Dans ce cas, l'enrobage de paraffine sert d'écran de rétention pour le combustible volatile précité.

Le second procédé de fabrication permettant d'obtenir un dispositif d'allumage destiné plus spécialement aux barbecues et devant répondre à certaines normes alimentaires va maintenant être décrit.

Dans ce cas, le produit combustible est constitué de charbon de bois répondant à la norme AFNOR NF B55 101 catégorie A, c'est-à-dire qu'il comprend 82% minimum de carbone fixe avant trempage dans le bain de paraffine, et contient 18% de taux d'humidité, de cendres et de matières volatiles.

Comme illustré en Fig.3, les morceaux de charbon de bois 2 sont plongés dans le bain de paraffine fondue à une température variant entre environ 100°C et environ 180°C pendant une à deux secondes.

La demanderesse a constaté qu'une température minimum de 100°C était nécessaire pour obtenir une bonne imprégnation des morceaux de charbon de bois 2 avec la paraffine. La température est limitée à 180°C pour limiter les risques d'inflammation de l'ensemble paraffine fondue 3/morceaux de bois 2. La paraffine pénètre à l'intérieur des morceaux de charbon de bois sur une épaisseur de 1 mm environ. Ensuite les morceaux de charbon de bois enrobés de paraffine, et référencés 4, sont retirés du bain de paraffine 3, et le procédé est alors le même que celui décrit précédemment.

Dans ce cas particulier de fabrication destiné à obtenir un dispositif d'allumage devant répondre à des normes précises pour un usage alimentaire, la paraffine utilisée est une paraffine alimentaire blanche, la moins huileuse possible et contenant par exemple au maximum 0,75% d'huile.

De même, l'enveloppe est constituée de papier alimentaire, à base de cellulose recouvert d'acrylique. De façon avantageuse, c'est la face interne de l'enveloppe de cellulose qui est recouverte d'acrylique. L'acrylique permet de réaliser la thermosoudure de l'enveloppe 5, d'obtenir une combustion régulière du dispositif d'allumage, et de pouvoir allumer le dispositif même dans de mauvaises conditions atmosphériques. De façon préférentielle, ce papier alimentaire présente un poids de l'ordre de 60 g/m² pour la cellulose, plus 15 g/m² pour l'acrylique. Cette épaisseur minimum permet d'obtenir une bonne résistance mécanique du papier et d'éviter les déchirures de celui-ci lors de son passage dans l'ensacheuse formant les enveloppes 5.

Diverses formes et dimensions de dispositifs peuvent être envisagées. Par exemple, pour des grils de restaurant, on pourra prévoir des doses plus grandes que celles destinées aux particuliers, ces doses pouvant contenir par exemple 3 litres de charbon de bois. Il est possible d'imprégner les morceaux de charbon de bois, préalablement à leur trempage dans la paraffine, de solutions contenant des produits aromatiques destinés à parfumer les grillades au cours de la cuisson.

Comme illustré aux figures 5 et 6, on utilise de préférence pour emballer les plaquettes de bois 4 ou les morceaux de charbons de bois 4 enrobés de paraffine, une enveloppe 5 en forme de manchon tubulaire. Un tel manchon tubulaire peut être formé en repliant sur elle-même une feuille de papier de cellulose recouvert d'acrylique ou de polyéthylène, en superposant les deux bords longitudinaux de cette feuille pour coller, thermosouder ou relier d'une autre façon équivalente les deux bords longitudinaux superposés de la feuille. Sur la Fig.5, on a représenté schématiquement sous la référence numérique 6 la zone de jonction longitudinale ainsi définie entre les deux bords superposés de la feuille d'enveloppe 5.

Dans l'hypothèse de l'utilisation d'un tel manchon tubulaire d'enveloppe 5, il suffit pour fermer l'emballage de rapprocher les bords transversaux de l'enveloppe 5, au niveau du contour d'ouverture de celle-ci, et de relier par tous moyens appropriés ces bords transversaux. Les zones de liaison ainsi définies au niveau des bords transversaux de l'enveloppe 5 sont représentés schématiquement sous forme de bandes référencées 7 et 8 sur la Fig.6.

De préférence comme illustré sur Fig.7, le dispositif d'allumage de foyers conforme à la présente invention est réalisé sous forme d'une bande 10 composée de différents sachets 11 reliés entre eux par les zones de liaison 7 et 8 précitées. Les zones de liaison 7 et 8 reliant deux sachets 11 adjacents sont munies avantageusement d'une ligne de prédécoupe médiane et transversale 9, facilitant la séparation de deux sachets adjacents 11 sans risque d'ouverture de l'enveloppe 5.

A titre d'exemple, chaque sachet peut avoir une contenance de l'ordre de 0,5 litre.

Quel que soit le type de dispositif d'allumage de foyers, destiné ou non à un usage alimentaire, conforme à la présente invention, il suffit lors de l'utilisation d'enflammer l'enveloppe 5. Celle-ci, grâce à sa composition particulière, se consume facilement et entraîne l'inflammation de la paraffine enrobant les plaquettes de bois 4 ou les morceaux de charbon de bois 4. Cette paraffine à son tour provoque l'inflammation des morceaux de produit combustible.

Il est entendu que l'invention n'est pas limitée à l'exemple de réalisation ci-dessus décrit pour lequel on pourra prévoir d'autres variantes de réalisation, sans pour autant sortir du cadre de l'invention.

## Revendications

1) Procédé de fabrication d'un dispositif d'allumage de foyers, notamment de foyers de cheminées et de barbecues, caractérisé par le fait qu'il comprend les étapes consistant à :
i) plonger des morceaux de produit combustible (2) dans un bain (3) de paraffine fondue,
ii) retirer ces morceaux du bain (3) de paraffine et les égoutter,
iii) refroidir les morceaux (4) de produit combustible enrobés de paraffine,
iv) sécher les morceaux (4),
v) emballer lesdits morceaux 4) de produit combustible enrobés de paraffine dans une enveloppe également combustible (5).

2) Procédé selon la revendication 1, caractérisé en ce que après avoir introduit les morceaux (4) dans l'enveloppe (5), celle-ci est fermée par thermosoudure.

3) Procédé selon les revendications 1 ou 2, et pour autant que le dispositif est appliqué aux foyers de cheminées, caractérisé en ce que préalablement à l'étape consistant à plonger les morceaux de produit combustible (2) dans un bain (3) de paraffine, on taille ces morceaux de produit combustible (2) en forme de plaquettes possédant une épaisseur moyenne (e) comprise entre environ 2 mm et environ 8 mm et une largeur (1) et une longueur (L) moyennes comprises entre environ 1 cm et environ 4 cm.

4) Procédé selon l'une quelconque des revendications précédentes, caractérisé en ce que l'on plonge les morceaux de produit combustible (2) dans un bain (3) de paraffine fondue à une température d'au moins 120°C.

5) Procédé selon l'une quelconque des revendications précédentes, caractérisé en ce que le produit combustible (2) comprend environ 50% en volume de bois résineux et environ 50% en volume de bois blanc, tel que du peuplier.

6) Procédé selon l'une quelconques des revendications précédentes, caractérisé en ce que l'enveloppe (5) est constituée de cellulose recouverte d'un film de polyéthylène en tout ou partie sur au moins une de ses faces, et en ce que cette enveloppe (5) a un poids de l'ordre de 60 g/m² pour la cellulose et 15 g/m² pour le polyéthylène.

7) Procédé selon l'une quelconques des revendications précédentes, caractérisé en ce qu'avant de plonger les morceaux de produit combustible (2) dans un bain de paraffine (3), on imprègne lesdits morceaux (2) d'un produit combustible volatile.

8. Procédé selon les revendications 1 ou 2, et pour autant que le dispositif soit appliqué aux foyers de barbecues, caractérisé en ce que la première étape consiste à plonger le combustible (2) dans un bain (3) de paraffine alimentaire contenant au maximum 0,75% d'huile, à une température variant entre environ 100°C et environ 180°C, pendant une à deux secondes.

9) Procédé selon la revendication 1, 2 ou 8, caractérisé en ce que le produit combustible (2) est du charbon de bois dont la quantité de carbone fixe est de 82% minimum avant trempage dans ladite paraffine alimentaire, et qui contient environ 18% de taux d'humidité, de cendres et de matières volatiles.

10) Procédé selon la revendication 1, 2, 8 ou 9, caractérisé en ce que l'enveloppe (5) est constituée de papier alimentaire, à base de cellulose recouvert d'acrylique en tout ou parties sur au moins une de ses faces.

11) Procédé selon la revendication 10, caractérisé en ce que l'enveloppe (5) de papier alimentaire a un poids de l'ordre de 60 g/m² pour la cellulose, plus 15 g/m² pour l'acrylique.

12) Procédé selon la revendication 1, 2, 8, 9, 10 ou 11, caractérisé en ce qu'avant de plonger les morceaux de produit combustible (2) dans un bain de paraffine (3), on imprègne les morceaux (2) de produits aromatiques.

13. Dispositif d'allumage de foyers, notamment de foyers de cheminées, obtenu par le procédé selon l'une des revendications 1 à 7, caractérisé en ce qu'il comprend une enveloppe (5) combustible thermosoudée, dans laquelle sont disposés des morceaux de produit combustible (2), constitués d'environ 50% en volume de bois résineux et environ 50% en volume de bois blanc, ces morceaux possédant une épaisseur moyenne (e) comprise entre environ 2 mm et environ 8 mm et une largeur (1) et une longueur (L) moyennes comprises entre environ 1 cm et environ 4 cm, et ces morceaux étant enrobés d'un produit combustible volatile et recouverts de paraffine.

14) Dispositif d'allumage de foyers, notamment de foyers de barbecues, obtenu par le procédé selon les revendications 1, 2, et 8 à 12, caractérisé en ce qu'il comprend une enveloppe (5) thermosoudée, combustible, en papier alimentaire à base de cellulose recouverte d'acrylique, d'un poids de l'ordre de 60 g/m² pour la cellulose et de 15 g/m² pour l'acrylique, dans laquelle sont disposés des morceaux de charbon de bois (2), imprégnés d'un combustible volatile, et enrobés de paraffine alimentaire contenant au maximum 0,75% d'huile, ces morceaux de charbon de bois (2) possédant une quantité de carbone fixe de 82% minimum et environ 18% de taux d'humidité, de cendres et de matières volatiles.

0248718

FIG1

FIG.2

FIG.3

FIG.4

FIG.5

FIG.6

FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 374 070  (DAVIS)  * Revendications 1,3 * | 1,2,4, 6,7,9, 13 | C 10 L   11/04 |
| A | | 3,5,8, 10,11, 14 | |
| Y | US-A-4 272 252   (ALTMAN)  * Revendications 1-7 * | 1,2,4, 6,7,9, 13 | |
| A | | 3,5,8, 10,11, 14 | **DOMAINES TECHNIQUES RECHERCHES (Int. Cl.4)** |
| A | US-A-4 063 904  (BEESON) * Revendication 1; colonne 3, lignes 24-31; colonne 4, lignes 10-12 * | 3 | C 10 L B 65 D A 47 J |
| A | FR-A-2 547 831  (SARL, DIFOP, OLLIVIER) * Revendication 1 *  ---          -/- | 3,5,12 ,13 | |

Le présent rapport de recherche a été établi pour toutes les revendications

| Lieu de la recherche | Date d'achèvement de la recherche | Examinateur |
|---|---|---|
| LA HAYE | 27-08-1987 | MEERTENS J. |

Office européen
des brevets

**RAPPORT DE RECHERCHE EUROPEENNE**

Numéro de la demande

EP 87 40 1206

Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 101 292 (HOGAN)<br><br>* Revendications 1,2; colonne 3, lignes 3-12 * | 1,6,10 ,11,13 ,14 | |
| | --- | | |
| A,D | US-A-3 647 403 (DAVIS)<br>* Revendications 1-4 * | 1,7,14 | |
| | ----- | | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 27-08-1987 | MEERTENS J. |